# EUROPÄISCHE PATENTSCHRIFT

(11) **EP 2 801 463 B1**
(45) Veröffentlichungstag und Bekanntmachung des Hinweises auf die Patenterteilung: **30.03.2016**
(21) Anmeldenummer: 13166693.5
(22) Anmeldetag: 06.05.2013
(51) Int. Cl.: B29C 39/00, C08K 3/08, C08L 33/06, C08L 67/06

(54) **Gießharz**
Casting resin
Résine de coulée

(43) Veröffentlichungstag der Anmeldung: 12.11.2014
(73) Patentinhaber: Hüther, Ulrich, 48599 Gronau (DE)
(72) Erfinder: Hüther, Ulrich, 48599 Gronau (DE)
(74) Vertreter: Freischem & Partner Patentanwälte mbB

(56) Entgegenhaltungen:
- WO-A1-99/01270
- WO-A1-99/47576
- DE-A1- 4 141 963
- JP-A- 2012 188 611

## Beschreibung

Die Erfindung betrifft ein Kit zur Bereitstellung einer Gießharzzusammensetzung, eine Gießharzzusammensetzung und ein Verfahren zur Herstellung eines ausgehärteten Formkörpers.

Viele Formkörper, die aus Harzzusammensetzungen entstehen, haben das Problem, dass sie nicht temperaturbeständig sind.

DE 41 41 963 A1 beschreibt eine Harzzusammensetzung.

Die Aufgabe der vorliegenden Erfindung besteht also darin, die Nachteile des Standes der Technik zu überwinden.

Die der Erfindung zu Grunde liegende Aufgabe wird in einer ersten Ausführungsform durch ein Kit zur Bereitstellung einer Gießharzzusammensetzung in separaten Behältern gelöst, enthaltend:
a. eine erste Harzkomponente
   i. 5 bis 20 Gewichtsteile Epoxymethacrylat,
   ii. 0,1 bis 5 Gewichtsteile Beschleuniger,
   iii. 35 bis 60 Gewichtsteile Methylmethycrylat,
   iv. 4 bis 8 Gewichtsteile Styrol, und
   v. 30 bis 50 Gewichtsteile Weichmacher, enthält
b. eine zweite Harzkomponente
   i. 80 bis 99 Gewichtsteile Polyesterharz,
   ii. 0,1 bis 10 Gewichtsteile Methylmethacrylat, und
   iii. 0,1 bis 10 Gewichtsteile Styrol enthält, und
c. 50 bis 70 Gewichtsteile mineralische, metallische oder Kohle-Füllstoffpartikel, und
d. 0,5 bis 8 Gewichtsteile Härter.

Die der Erfindung zu Grunde liegende Aufgabe wird in einer weiteren Ausführungsform gelöst durch eine Gießharzzusammensetzung enthaltend,
a. 30 bis 50 Gewichtsteile eines Harzgemisches aus einer ersten Harzkomponente und einer zweiten Harzkomponente, wobei
   i. die erste Harzkomponente
      (1) 5 bis 20 Gewichtsteile Epoxymethycrylat,
      (2) 0,1 bis 5 Gewichtsteile Beschleuniger,
      (3) 35 bis 60 Gewichtsteile Methylmethycrylat,
      (4) 4 bis 8 Gewichtsteile Styrol, und
      (5) 30 bis 50 Gewichtsteile Weichmacher, enthält
   ii. die zweite Harzkomponente
      (1) 80 bis 99 Gewichtsteile Polyesterharz,
      (2) 0,1 bis 10 Gewichtsteile Methylmethacrylat, und
      (3) 0,1 bis 10 Gewichtsteile Styrol enthält,
b. 50 bis 70 Gewichtsteile mineralische, metallische oder Kohle-Füllstoffpartikel, und
c. 0,5 bis 8 Gewichtsteile Härter.

Bei dem erfindungsgemäßen Kit oder der erfindungsgemäßen Harzzusammensetzung liegt der Anteil an Harzgemisch vorzugsweise in einem Bereich von 35 bis 45 Gewichtsteilen. Unabhängig davon liegt der Anteil vorzugsweise in einem Bereich von 30 bis 50 Gew.%.

Bei dem erfindungsgemäßen Kit oder der erfindungsgemäßen Harzzusammensetzung sind die Füllstoffpartikel vorzugsweise Aluminiumpartikel.

Bei dem erfindungsgemäßen Kit oder der erfindungsgemäßen Harzzusammensetzung liegt das Gewichtsverhältnis der ersten zur zweiten Harzkomponente vorzugsweise in einem Bereich von 1:1,5 bis 1:3, besonders bevorzugt bei 1:2.

Bei dem erfindungsgemäßen Kit oder der erfindungsgemäßen Harzzusammensetzung können die beiden Harzkomponenten vorzugsweise mit Hydrochinon stabilisiert sein.

Bei dem erfindungsgemäßen Kit oder der erfindungsgemäßen Harzzusammensetzung ist ein Epoxymethacrylat. Der Anteil der Mischung liegt vorzugsweise in einem Bereich von 10 bis 15 Gewichtsteilen. Unabhängig davon liegt der Anteil vorzugsweise in einem Bereich von 10 bis 15 Gew.%.

Bei dem erfindungsgemäßen Kit oder der erfindungsgemäßen Harzzusammensetzung handelt es sich bei den Aluminiumpartikeln vorzugsweise um Aluminiumsprühgrieß. Der Anteil der Aluminiumpartikel liegt vorzugsweise in einem Bereich von 55 bis 65 Gewichtsteilen. Unabhängig davon liegt der Anteil vorzugsweise in einem Bereich von 50 bis 70 Gew.%. Die durchschnittliche Partikelgröße beträgt vorzugsweise bis zu 65 µm und unabhängig davon wenigstens 1 µm. Die Partikelgröße kann mit einem optischen Mikroskop, beispielsweise durch Auszählung, als arithmetisches Mittel bestimmt werden.

Bei dem erfindungsgemäßen Kit oder der erfindungsgemäßen Harzzusammensetzung liegt der Anteil des Härters vorzugsweise in einem Bereich von 1 bis 5 Gewichtsteilen, besonders bevorzugt in einem Bereich von 2 bis 4 Gewichtsteilen. Unabhängig davon liegt der Anteil in einem Bereich von 1 bis 5 Gew.%. Der Härter kann vorzugsweise ein Peroxid, besonders bevorzugt Benzoylperoxid sein.

Bei dem erfindungsgemäßen Kit oder der erfindungsgemäßen Harzzusammensetzung liegt der Anteil des Beschleunigers vorzugsweise in einem Bereich von 0,5 bis 1,5 Gewichtsteilen. Unabhängig davon liegt der Anteil in einem Bereich von 0,5 bis 1,5 Gew.%. Der Beschleuniger ist vorzugsweise ein Trimethylanilin, besonders bevorzugt N,N-Dimethyl-p-toluidin.

Bei dem erfindungsgemäßen Kit oder der erfindungsgemäßen Harzzusammensetzung liegt der Anteil an Methylmethacrylat (MMA) in der ersten Harzkomponente vorzugsweise in einem Bereich von 38 bis 42 Gewichtsteilen. Unabhängig davon liegt der Anteil in einem Bereich von 38 bis 42 Gew.%.

Bei dem erfindungsgemäßen Kit oder der erfindungsgemäßen Harzzusammensetzung liegt der Anteil an Styrol in der ersten Harzkomponente vorzugsweise in einem Bereich von 5 bis 7 Gewichtsteilen. Unabhängig davon liegt der Anteil in einem Bereich von 4 bis 8 Gew.%.

Bei dem erfindungsgemäßen Kit oder der erfindungsgemäßen Harzzusammensetzung liegt der Anteil an Weichmacher in der ersten Harzkomponente vorzugsweise in einem Bereich von 35 bis 41 Gewichtsteile. Unabhängig davon liegt der Anteil in einem Bereich von 35 bis 41 Gew.%. Der Weichmacher ist vorzugsweise ein Polyester aus aliphatischen Dicarbonsäuren.

Bei dem erfindungsgemäßen Kit oder der erfindungsgemäßen Harzzusammensetzung liegt der Anteil an Polyesterharz in der zweiten Harzkomponente vorzugsweise in einem Bereich von 85 bis 95 Gewichtsteilen. Unabhängig davon liegt der Anteil in einem Bereich von 85 bis 95 Gew.%. Das Polyesterharz in der zweiten Harzkomponente ist vorzugsweise ein ungesättigtes Polyesterharz (UP), besonders bevorzugt auf Basis von Orthophthalsäure oder Maleinsäure und Standardglykolen.

Bei dem erfindungsgemäßen Kit oder der erfindungsgemäßen Harzzusammensetzung liegt der Anteil an Methylmethacrylat in der zweiten Harzkomponente vorzugsweise in einem Bereich von 2 bis 8 Gewichtsteilen. Unabhängig davon liegt der Anteil in einem Bereich von 2 bis 8 Gew.%.

Bei dem erfindungsgemäßen Kit oder der erfindungsgemäßen Harzzusammensetzung liegt der Anteil an Styrol in der zweiten Harzkomponente vorzugsweise in einem Bereich von 2 bis 8 Gewichtsteile. Unabhängig davon liegt der Anteil in einem Bereich von 2 bis 8 Gew.%.

Die der Erfindung zu Grunde liegende Aufgabe wird in einer weiteren Ausführungsform durch ein Verfahren zur Herstellung eines ausgehärteten Formkörpers gelöst, wobei man
a. in einem ersten Schritt die erste Harzkomponente mit der zweiten Harzkomponente des erfindungsgemäßen Kits vermischt, und die Aluminiumpartikel zufügt,
b. diese so entstandene Zusammensetzung verrührt,
c. den Härter zufügt,
d. die entstehende Masse in eine Gießform gibt, und man
e. die Masse in der Gießform aushärten lässt.

Bei dem erfindungsgemäßen Verfahren geschieht das Verrühren vorzugsweise bis eine homogene Mischung entsteht.

Bei dem erfindungsgemäßen Verfahren wird die Mischung nach dem Verrühren vorzugsweise einige Stunden, besonders bevorzugt 1 bis 2 Stunden, zum Entlüften abgedeckt. Dabei kann die Mischung vorzugsweise gelegentlich umgerührt werden, um eine Sedimentation zu vermeiden.

Bei dem erfindungsgemäßen Verfahren wird der Formkörper nach dem Aushärten vorzugsweise aus der Gießform herausgelöst. Die Gießform wird vor dem Verfahren vorzugsweise mit einem Trennmittel versehen.

Bei dem erfindungsgemäßen Verfahren stellt man durch die Wahl der geeigneten Parameter die Zeit für die Aushärtung auf einen Bereich von 30 bis 70 Minuten ein. Die Aushärtung geschieht vorzugsweise bei Raumtemperatur.

Bei dem erfindungsgemäßen Verfahren ist der Formkörper vorzugsweise eine Gussform, eine Platte oder ein Block.

### Ausführungsbeispiel:

In einem konkreten Ausführungsbeispiel wurde die erste Harzkomponente wie folgt angesetzt:
13 Gewichtsteile Epoxymethycrylat (Acrylharz in 10 % MMA)
1 Gewichtsteil DMPT (N,N-Dimethyl-p-toluidin)
42 Gewichtsteile Methylmethacrylat
6 Gewichtsteile Styrol
38 Gewichtsteile Weichmacher Palamoll^{®} (von der BASF)

Die zweite Harzkomponente wurde wie folgt angesetzt:
90 Gewichtsteile Colpoly 7165/5 von Helios (ein ungesättigtes UP-Harz)
5 Gewichtsteile Methylmethacrylat
5 Gewichtsteile Styrol

Die beiden Harzkomponenten wurden vermischt und 60 Gewichtsteile Aluminiumsprühgrieß mit einer durchschnittlichen Partikelgröße von 50 µm zugegeben. Die Mischung wurde homogen verrührt. Die Masse wurde dann 2 h zum Entlüften abgedeckt und gelegentlich umgerührt, damit keine Sedimentation auftritt.

Dann wurden 3 Gewichtsteile Benzoylperoxid zugegeben und die Masse in die mit Trennmittel versehene Gießform gegeben.

Nach 18 Minuten bei Raumtemperatur gelierte die Masse und härtete dann nach weiteren 50 Minuten vollständig aus. Dabei entstand eine Reaktionstemperatur von 125°C. Der entstandene Formkörper war nach Abkühlung auf Raumtemperatur ohne weitere Wärmebehandlung bis 130°C wärmeformbeständig und konnte beispielsweise für Vakuumtiefziehverfahren eingesetzt werden.

Die beiden Harzkomponenten waren mit Hydrochinon stabilisiert.

Die in der vorliegenden Beschreibung sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Kit zur Bereitstellung einer Gießharzzusammensetzung enthaltend in separaten Behältern:
a. eine erste Harzkomponente
i. 5 bis 20 Gewichtsteile Epoxymethacrylat,
ii. 0,1 bis 5 Gewichtsteile Beschleuniger,
i. 35 bis 60 Gewichtsteile Methylmethycrylat,
ii. 4 bis 8 Gewichtsteile Styrol, und
iii. 30 bis 50 Gewichtsteile Weichmacher, enthält
b. eine zweite Harzkomponente
i. 80 bis 99 Gewichtsteile Polyesterharz,
ii. 0,1 bis 10 Gewichtsteile Methylmethacrylat, und
iii. 0,1 bis 10 Gewichtsteile Styrol enthält, und
c. 50 bis 70 Gewichtsteile mineralische, metallische oder Kohle-Füllstoffpartikel, und
d. 0,5 bis 8 Gewichtsteile Härter.

2. Gießharzzusammensetzung enthaltend,
a. 30 bis 50 Gewichtsteile eines Harzgemisches aus einer ersten Harzkomponente und einer zweiten Harzkomponente, wobei
i. die erste Harzkomponente
(1) 5 bis 20 Gewichtsteile Epoxymethacrylat,
(2) 0,1 bis 5 Gewichtsteile Beschleuniger,
(3) 35 bis 60 Gewichtsteile Methylmethycrylat,
(4) 4 bis 8 Gewichtsteile Styrol, und
(5) 30 bis 50 Gewichtsteile Weichmacher, enthält
ii. die zweite Harzkomponente
(6) 80 bis 99 Gewichtsteile Polyesterharz,
(7) 0,1 bis 10 Gewichtsteile Methylmethacrylat, und
(8) 0,1 bis 10 Gewichtsteile Styrol enthält,
b. 50 bis 70 Gewichtsteile mineralische, metallische oder Kohle-Füllstoffpartikel, und
c. 0,5 bis 8 Gewichtsteile Härter.

3. Kit gemäß Anspruch 1 oder Gießharzzusammensetzung gemäß Anspruch 2, **dadurch gekennzeichnet, dass** das Polyesterharz der zweiten Harzkomponente ein ungesättigtes Polyesterharz ist.

4. Kit gemäß Anspruch 1 oder Gießharzzusammensetzung gemäß Anspruch 2 oder Kit oder Gießharzzusammensetzung gemäß Anspruch 3, **dadurch gekennzeichnet, dass** der Anteil an Harzgemisch vorzugsweise in einem Bereich von 35 bis 45 Gewichtsteilen liegt.

5. Kit gemäß Anspruch 1 oder Gießharzzusammensetzung gemäß Anspruch 2 oder Kit oder Gießharzzusammensetzung gemäß einem der Ansprüche 3 bis 4, **dadurch gekennzeichnet, dass** das Gewichtsverhältnis der ersten zur zweiten Harzkomponente vorzugsweise in einem Bereich von 1:1,5 bis 1:3 liegt.

6. Kit gemäß Anspruch 1 oder Gießharzzusammensetzung gemäß Anspruch 2 oder Kit oder Gießharzzusammensetzung gemäß einem der Ansprüche 3 bis 5, **dadurch gekennzeichnet, dass** es sich bei den Füllstoffpartikeln um Aluminiumpartikel, vorzugsweise um Aluminiumsprühgrieß handelt.

7. Kit gemäß Anspruch 1 oder Gießharzzusammensetzung gemäß Anspruch 2 oder Kit oder Gießharzzusammensetzung gemäß einem der Ansprüche 3 bis 6, **dadurch gekennzeichnet, dass** der Anteil des Härters vorzugsweise in einem Bereich von 1 bis 5 Gewichtsteilen liegt.

8. Kit gemäß Anspruch 1 oder Gießharzzusammensetzung gemäß Anspruch 2, **dadurch gekennzeichnet, dass** der Anteil an Polyesterharz in der zweiten Harzkomponente vorzugsweise in einem Bereich von 85 bis 95 Gewichtsteilen liegt.

9. Kit gemäß Anspruch 1 oder Gießharzzusammensetzung gemäß Anspruch 2, **dadurch gekennzeichnet, dass** der Anteil an Weichmacher in der ersten Harzkomponente, vorzugsweise in einem Bereich von 35 bis 41 Gewichtsteilen liegt.

10. Verfahren zur Herstellung eines ausgehärteten Formkörpers, wobei man
a. in einem ersten Schritt die erste Harzkomponente mit der zweiten Harzkomponente des Kits gemäß einem der Ansprüche 1 oder 3 bis 9 vermischt, und die Aluminiumpartikel zufügt,
b. diese so entstandene Zusammensetzung verrührt ,
c. den Härter zufügt,
d. die entstehende Masse in eine Gießform gibt, und man
e. die Masse in der Gießform aushärten lässt.

## Claims

1. A kit for providing a casting resin composition containing in separate containers:
a. a first resin component containing
i. 5 to 20 parts by weight of epoxy methacrylate,
ii. 0.1 to 5 parts by weight of an accelerator,
iii. 35 to 60 parts by weight of methyl methacrylate,
iv. 4 to 8 parts by weight of styrene, and
v. 30 to 50 parts by weight of a plasticiser,
b. a second resin component containing
i. 80 to 99 parts by weight of a polyester resin,
ii. 0.1 to 10 parts by weight of methyl methacrylate, and
iii. 0.1 to 10 parts by weight of styrene, and
c. 50 to 70 parts by weight of mineral, metal, or carbon filler particles, and
d. 0.5 to 8 parts by weight of a hardener.

2. A casting resin composition containing
a. 30 to 50 parts by weight of a resin blend of a first resin component and a second resin component, wherein
i. the first resin component contains
(1) 5 to 20 parts by weight of epoxy methacrylate,
(2) 0.1 to 5 parts by weight of an accelerator,
(3) 35 to 60 parts by weight of methyl methacrylate,
(4) 4 to 8 parts by weight of styrene, and
(5) 30 to 50 parts by weight of a plasticiser,
ii. the second resin component contains
(6) 80 to 99 parts by weight of a polyester resin,
(7) 0.1 to 10 parts by weight of methyl methacrylate, and
(8) 0.1 to 10 parts by weight of styrene,
b. 50 to 70 parts by weight of mineral, metal, or carbon filler particles, and
c. 0.5 to 8 parts by weight of a hardener.

3. The kit according to claim 1 or the casting resin composition according to claim 2, **characterised in that** the polyester resin of the second resin component is an unsaturated polyester resin.

4. The kit according to claim 1 or the casting resin composition according to claim 2 or the kit or the casting resin composition claim 3, **characterised in that** the resin blend proportion preferably ranges from 35 to 45 parts by weight.

5. The kit according to claim 1 or the casting resin composition according to claim 2 or the kit or the casting resin composition according to any one of claims 3 to 4, **characterised in that** the weight ratio of the first to the second resin component preferably ranges from 1:1,5 to 1:3.

6. The kit according to claim 1 or the casting resin composition according to claim 2 or the kit or the casting resin composition according to any one of claims 3 to 5, **characterised in that** the filler particles are aluminium particles, preferably aluminium spray grit.

7. The kit according to claim 1 or the casting resin composition according to claim 2 or the kit or the casting resin composition according to any one of claims 3 to 6, **characterised in that** the hardener proportion preferably ranges from 1 to 5 parts by weight.

8. The kit according to claim 1 or the casting resin composition according to claim 2, **characterised in that** the polyester resin proportion in the second resin component preferably ranges from 85 to 95 parts by weight.

9. The kit according to claim 1 or the casting resin composition according to claim 2, **characterised in that** the plasticiser proportion in the first resin component preferably ranges from 35 to 41 parts by weight.

10. A process for preparing a cured moulded body, wherein
a. in a first step the first resin component is blended with the second resin component of the kit according to any one of claims 1 or 3 to 9 and the aluminium particles are added,
b. the composition thus obtained is stirred,
c. the hardener is added,
d. the resulting mass is added to a casting mould, and
e. the mass is allowed to cure in the casting mould.

## Revendications

1. Kit pour obtenir une composition de résine de moulage comprenant, dans des récipients séparés :
a. un premier composant de résine
i. 5 à 20 parties en poids de méthacrylate d'époxy,
ii. 0,1 à 5 parties en poids d'accélérateur,
iii. 35 à 60 parties en poids de méthacrylate de méthyle,
iv. 4 à 8 parties en poids de styrène, et
v. 30 à 50 parties en poids de plastifiant,
b. un deuxième composant de résine
i. 80 à 99 parties en poids de résine de polyester,
ii. 0,1 à 10 parties en poids de méthacrylate de méthyle, et
iii. 0,1 à 10 parties en poids de styrène, et
c. 50 à 70 parties en poids de particules de charge minérales, métalliques ou de carbone, et
d. 0,5 à 8 parties en poids de durcisseur.

2. Composition de résine de moulage, contenant,
a. de 30 à 50 parties en poids d'un mélange de résines composé d'un premier composant de résine et d'un deuxième composant de résine, dans lequel
i. le premier composant de résine comporte
(1) 5 à 20 parties en poids de méthacrylate d'époxy,
(2) 0,1 à 5 parties en poids d'accélérateur,
(3) 35 à 60 parties en poids de méthacrylate de méthyle,
(4) 4 à 8 parties en poids de styrène, et
(5) 30 à 50 parties en poids de plastifiant,
ii. le deuxième composant de résine comporte
(6) 80 à 99 parties en poids de résine de polyester,
(7) 0,1 à 10 parties en poids de méthacrylate de méthyle, et
(8) 0,1 à 10 parties en poids de styrène,
b. 50 à 70 parties en poids de particules de charge minérales, métalliques ou de carbone, et
c. 0,5 à 8 parties en poids de durcisseur.

3. Kit selon la revendication 1 ou composition de résine de moulage selon la revendication 2, caractérisé(e) en ce que: la résine de polyester du deuxième composant de résine est une résine de polyester insaturée.

4. Kit selon la revendication 1 ou composition de résine de moulage selon la revendication 2 ou kit ou composition de résine de moulage selon la revendication 3, caractérisé(e) en ce que la quantité de mélange de résines est de préférence dans une plage de 35 à 45 parties en poids.

5. Kit selon la revendication 1 ou composition de résine de moulage selon la revendication 2 ou kit ou composition de résine de moulage selon l'une quelconque des revendications 3 et 4, caractérisé(e) en ce que le rapport en poids du premier sur le deuxième composant de résine est de préférence dans une plage de 1:1,5 à 1:3.

6. Kit selon la revendication 1 ou composition de résine de moulage selon la revendication 2 ou kit ou composition de résine de moulage selon l'une quelconque des revendications 3 à 5, caractérisé(e) en ce que les particules de charge sont des particules d'aluminium, de préférence de la poudre d'aluminium pulvérisée.

7. Kit selon la revendication 1 ou composition de résine de moulage selon la revendication 2 ou kit ou composition de résine de moulage selon l'une quelconque des revendications 3 à 6, caractérisé(e) en ce que la proportion de durcisseur est de préférence dans une plage de 1 à 5 parties en poids.

8. Kit selon la revendication 1 ou la composition de résine de moulage selon la revendication 2, caractérisé(e) en ce que la proportion de la résine de polyester dans le deuxième composant de résine est de préférence dans une plage de 85 à 95 parties en poids.

9. Kit selon la revendication 1 ou composition de résine de moulage selon la revendication 2, caractérisé(e) en ce que la proportion de plastifiant dans le premier composant de résine est de préférence dans une plage de 35 à 41 parties en poids.

10. Procédé de préparation d'un corps de moulage durci, dans lequel
a. dans une première étape, le premier composant de résine et le deuxième composant de résine sont mélangés à l'aide du kit selon l'une quelconque des revendications 1 ou 3 à 9, et en ajoutant les particules d'aluminium,
b. cette composition résultante est agitée,
c. le durcisseur est ajouté,
d. la masse résultante est versée dans un moule, et
e. la masse se solidifie dans le moule.
